Europäisches Patentamt

European Patent Office

Office européen des brevets

(11) Publication number: **0 059 924**
**B1**

# (12) EUROPEAN PATENT SPECIFICATION

(45) Date of publication of patent specification: 23.01.85

(51) Int. Cl.4: **H 02 P 5/40, B 60 L 9/22**

(21) Application number: 82101599.7

(22) Date of filing: 02.03.82

(54) Control apparatus for electric cars propelled by induction motor.

(30) Priority: 04.03.81 JP 29911/81

(43) Date of publication of application:
15.09.82 Bulletin 82/37

(45) Publication of the grant of the patent:
23.01.85 Bulletin 85/04

(84) Designated Contracting States:
DE FR GB SE

(56) References cited:
EP-A-0 022 267
FR-A-2 451 126
US-A-3 781 614

TECHNISCHE MITTEILUNGEN AEG-
TELEFUNKEN, vol.67, no.1, 1977, Berlin (DE), G.
CIESSOW et al.:"Drehstrom-Antriebssysteme
fur Bahnfahrzeuge", pages 35-43

(73) Proprietor: Hitachi, Ltd.
5-1, Marunouchi 1-chome
Chiyoda-ku Tokyo 100 (JP)

(72) Inventor: Tanamachi, Tokunosuke
3600-455, Nakane
Katsuta-shi (JP)
Inventor: Ibamoto, Masahiko
434-2, Takeda
Katsuta-shi (JP)
Inventor: Terunuma, Matsuhiro
4237-15, Sakadocho
Mito-shi (JP)
Inventor: Tsuboi, Takashi
897-13, Ichige
Katsuta-shi (JP)
Inventor: Suzuki, Katsuaki
1838, Fujigaoka Sekimotocho
Kitaibaraki-shi (JP)

(74) Representative: Ebbinghaus, Dieter et al
v. FÜNER, EBBINGHAUS, FINCK Patentanwälte
European Patent Attorneys Mariahilfplatz 2 & 3
D-8000 München 90 (DE)

Courier Press, Leamington Spa, England.

## Description

This invention relates to an improvement of a control apparatus for an electric car propelled by an induction motor in which electric power is supplied from DC power supply through an inverter to an induction motor so as to drive the rolling stock. Such control apparatus as specified in the precharacterizing portions of Claims 1 and 2, is known from FR—A— 2 451 126, "Techn. Mitt. AEG-Telefunken" 67 (1977), pp. 35—43 and US—A—3 781 614.

In electric trains, DC motors have been used as traction motors for many years, and use of induction motors has been discussed from old times because induction motors need no maintenance, are easy to make in small-size and have excellent adhesion characteristics.

Recently, a power converter capable of operating induction motors at a high efficiency has been developed with an advance of semiconductor technology, and at least an electric car driven by an induction motor has been realized.

As the power converter, there are used an inverter in a DC electric railway, and the combination of a converter and an inverter or a frequency converter in an AC electric railway. In either case, use of an inverter is advantageous.

The inverter is able to derive polyphase (usually three-phase) alternating current of variable frequency and variable voltage from a DC power supply (also including the output of the converter). In order to operate induction motors at high efficiency, it is advantageous to use a pulse width modulation inverter which causes little waveform distortion.

The output frequency of this inverter is controlled to be a frequency obtained by adding the slip frequency of an induction motor to the speed of a car upon power running, and to be a frequency obtained by subtracting a slip frequency from the speed of a car upon regenerative braking. The output voltage is desirably controlled to be proportional to the output frequency, and to do so, two control systems can be considered. First, the voltage is adjusted by a current-constant control system, and as a result the output voltage of the inverter is approximately proportional to the output frequency. Second, a voltage control system arranged to produce a voltage proportional to the frequency is used to maintain the motor current approximately constant.

In order to apply such control to all the speed ranges of a car, the output frequency of inverter is changed from several Hz (corresponding to the slip frequency) to a hundred and several tens of Hz. Therefore, the AC component of such a frequency may flow in a DC current path between the DC power supply and the inverter. This AC component is transmitted directly on the aerial wiring, causing induction interference in a DC electric railway, and it may cause the operation of the converter to be unstable in an AC electric railway.

For these reasons, a filter circuit is inserted between the DC power source and the inverter, and this filter circuit is arranged to have its resonant frequency lower than 50 to 60 Hz in order to prevent a track circuit relay for the operation of a crossing alarm or the like from malfunctioning. However, the resonant frequency of the filter circuit can not practically be reduced to a value lower than the lowest frequency (several Hz) of the inverter from the consideration of the size of its reactor and capacitor. Thus, if the resonant frequency of the filter circuit is selected to be 20 Hz, the filter circuit resonates to 20 Hz when the operation frequency of inverter changes past this frequency upon low-speed running of car, causing an oscillation in DC input current to the inverter, the voltage across the filter capacitor and the current from DC power supply.

This electrical oscillation causes the commutation of inverter to fail, the torque of induction motor to oscillate, and the ride of the car to be uncomfortable.

It is an object of this invention to provide a control apparatus capable of suppressing the oscillation in DC current and so forth without increasing the size of the filter circuit, thereby stabilizing the operation of the inverter and making the ride in the car comfortable.

According to one aspect of this invention as specified in Claim 1 detection is made of oscillating change of electrical quantity in an electrical circuit between the DC power supply and the induction motor, and the detected output is used to adjust the output voltage of the inverter.

In other words, if the DC current flowing into the filter circuit from the DC power supply tends to increase, having an oscillation upon, for example, power running, due to the resonance of the filter circuit, this tendency is detected and the increase of the voltage across the filter due to the increase of current is suppressed by decreasing the inverter voltage as viewed from the filter (DC power supply side). If the DC current decreases having an oscillation, the inverter voltage is increased thereby suppressing the decrease of the voltage across the capacitor due to the decrease of current. Upon regenerative braking, the inverter voltage as viewed from the power supply side is increased and decreased against the oscillating increase and decrease of current flowing to the power supply side.

As a consequence, the electric oscillation is suppressed, and thus the trouble caused thereby is eliminated.

According to another aspect of the invention as specified in Claim 2, detection is made of the oscillating change of electrical quantity in an electrical circuit between the DC power supply and the induction motor, and the output frequency of the inverter is adjusted in accordance with the output. A similar control apparatus is known from US—A—3 781 614 but solves a different problem; voltage deviations, for example caused by periods of power interruption, are counteracted only above or below a preselected range.

In the induction motor, it is desired to maintain the ratio of voltage to frequency, v/f to be constant, and a control system for this purpose is constructed as set forth above. However, the output voltage from the inverter has a maximum level which is low as compared with the output frequency associated therewith. When the output voltage reaches its maximum value, the oscillation can no longer be suppressed by the adjustment of the output voltage, but the output frequency of the inverter can be increased and decreased yet. If the output frequency of the inverter is increased and decreased at a given speed, the motor current can be increased and decreased respectively and also the above oscillation can be suppressed.

Particularly in the case of the PWM inverter, it is advantageous to suppress the electrical oscillation by adjusting the output frequency.

In other words, the PWM inverter has a stepwise voltage change when the output voltage is increased to the maximum as described later. If the filter circuit resonates to the stepwise voltage change, the voltage from the PWM inverter in the maximum output voltage condition can not be adjusted continuously, and therefore it is ineffective to suppress the osicllation.

However, the electrical oscillation can be suppressed by adjusting the operating frequency of the inverter.

The above feature and other features of this invention will become more readily understood from the following exemplary description taken with the accompanying drawings, wherein:

Fig. 1 is a circuit diagram of one embodiment of the control apparatus for an electric car propelled by an induction motor according to this invention;

Fig. 2 is a graph of the phase and gain characteristic curves of a band-pass filter circuit;

Fig. 3 is a waveform diagram of voltage and current at each part useful for explaining the oscillation suppressing operation according to this invention;

Fig. 4 is a graph of the current-frequency characteristic curves of the induction motor;

Fig. 5 is a graph of the pulse number and output voltage-frequency characteristic curves of the pulse width modulation inverter;

Fig. 6 is a waveform diagram useful for explaining the operation of three-pulse modulation mode;

Fig. 7 is a waveform diagram useful for explaining the operation of one-pulse modulation mode;

Fig. 8 is a circuit diagram of another embodiment of the control apparatus for induction motor driven electric car according to the invention; and

Fig. 9 is a graph of the current characteristic curves of motor useful for explaining the oscillation suppressing operation in Fig. 8.

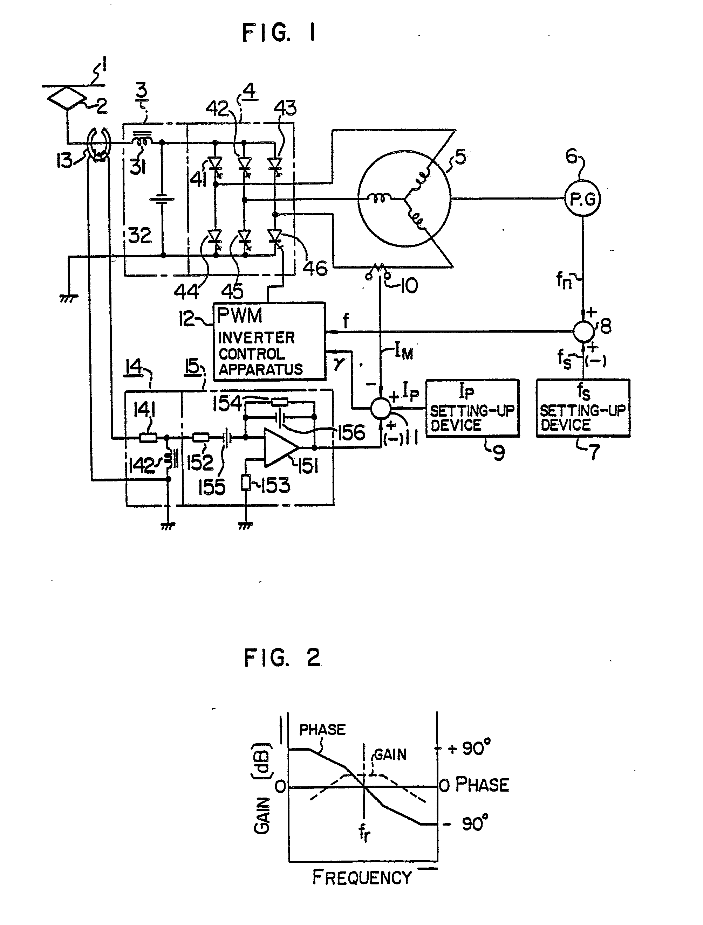

Fig. 1 shows an arrangement of one embodiment of the control apparatus for an electric car propelled by an induction motor according to this invention.

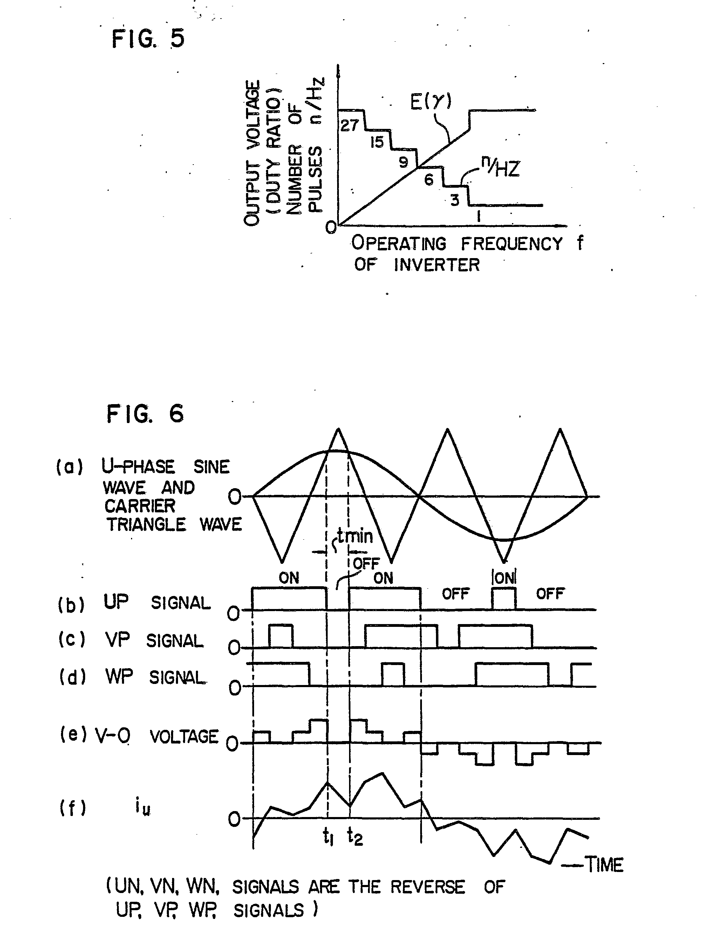

A current collected by a pantograph 2 from a DC power supply or power line 1 is supplied through a filter circuit 3 to a three-phase inverter 4. The L—C filter circuit 3 is consisted of a reactor 31 and a capacitor 32. The inverter 4 is an inverter chiefly having gate-turn off thyristors (GTO) 41 to 46 capable of pulse width modulation (PWM), or a general type thyristor inverter. The output of the inverter 4, or a three-phase AC of variable frequency and variable voltage is applied to a three-phase induction motor 5. The motor 5 drives the electric car and also allows a pulse generator 6 to rotate to generate a speed frequency signal fn corresponding to the speed of the electric car. The electric car has a slip-frequency fs setting-up device 7, and slip-frequency fs from which is applied to an adding-and-subtracting device 8, to which the speed frequency signal fn is also applied. Consequently, upon power running, the device 8 calculates f=fn+fs, and upon regeneration, it calculates f=fn—fs so as to generate an inverter operation frequency command f. The electric car also has a current command f. The electric car also has a motor current command $I_p$ setting-up device 9, the output Ip from which is compared with an output $I_M$ from a motor current detector 10 by a comparator 11, thus a duty ratio command $\gamma$ being produced from the comparator 11. The inverter operation frequency command f and duty ratio (also called the modulation degree corresponding to the output voltage) command $\gamma$ thus produced are applied to a PWM- or simple-inverter control apparatus 12. The PWM inverter control apparatus 12 is well known, for example, in Hitachi Review, Vol. 61, No. 5 (1979-5), p. 27 to 32, particularly in the modulator section and gate processing signal circuit in Fig. 6 at p. 30. Thus, the induction motor 5 can be controlled in its frequency and voltage so that the motor current $I_M$ follows the set-up value Ip with the set-up frequency fs. Of course, as described in the Hitachi Review, a control system can also be provided which controls the voltage to vary as the frequency, or the current control system can be replaced by this voltage control system.

In such control system, an electric oscillation is caused as described above. Thus, the oscillating variation of the line current is detected and applied to the comparator 11 of the current control system to adjust the inverter output voltage. In other words, a current transformer 13 with an air gap can detect an AC component of the line current. The output of the transformer 13 is negatively fed back to the comparator 11 within the current control system, through a phase shift circuit 14 and a band-pass filter circuit 15. The phase shift circuit 14 is formed of a resistor 141 and a choke coil 142 connected in series. The voltage across the choke coil 142 results from delaying the output voltage of the transformer 13 by 90 degrees. The output of the current transformer 13 with an air gap can be regarded as a constant current source, and thus the voltage drop $e_R$ across the resistor 141 is given by

$$e_R = i \, R$$

where i represents the current, R the resistance value (Ω) of the resistor 141, and L the inductance (H) of the choke coil 142. If the internal resistance of the choke coil is much smaller than the resistance R, the voltage $e_L$ across the choke coil 142 is given by

$$e_L = L \frac{di}{dt}$$

and therefore it leads the $e_R$ by 90°. If this voltage is inverted in its polarity, the output by the current transformer 13 can be delayed by 90°.

The band-pass filter circuit 15 is formed of an operational amplifier 151, resistors 152, 153 and 154 and capacitors 155 and 156. The gain and phase characteristics of the band-pass filter circuit 15, as shown in Fig. 2, provides a high gain and in-phase input and output at around the resonant frequency, fr of the filter circuit 3.

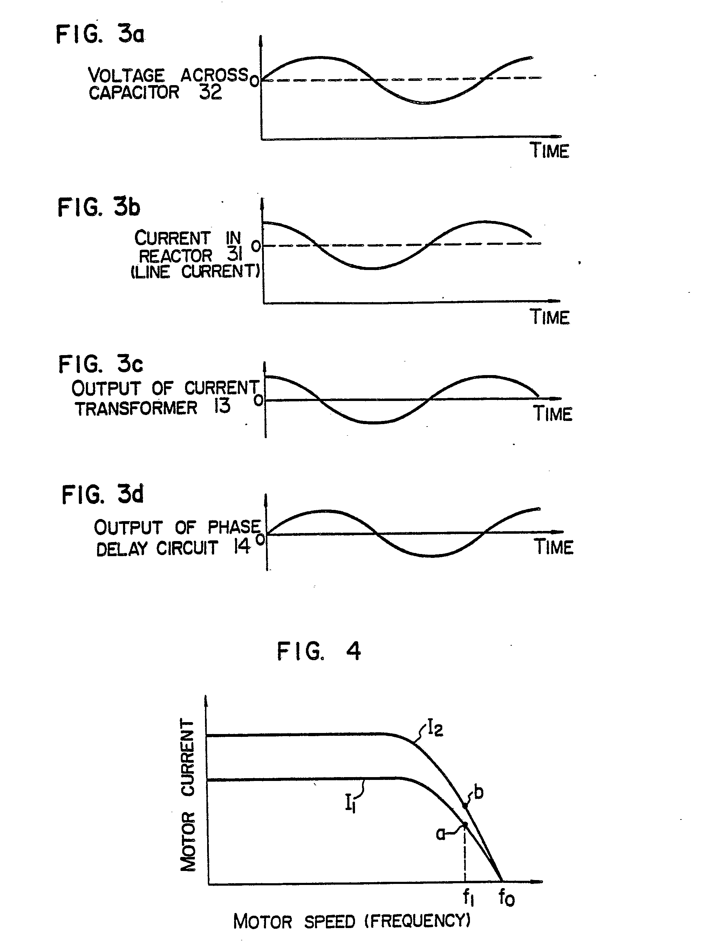

Fig. 3 shows the voltage and current waveform of each part, assuming that the output of the band-pass filter circuit 15 is not applied to the comparator 11. The oscillation suppressing operation will be described with reference to Fig. 3.

When the voltage across the capacitor 32 oscillates as shown in Fig. 3a, the current in the reactor 31, or the line current leads the voltage across the capacitor 32 by about 90° as shown in Fig. 3b. The oscillating portion of the line current (AC component) is detected by the current transformer 13 with an air gap as shown in Fig. 3C. The output of the current transformer 13 is applied to the phase shift circuit 14, which then produces an output delayed about 90° with respect to the input, as shown in Fig. 3d. This output is applied to the band-pass filter circuit 15 where it is amplified because the band-pass filter circuit 15 has a high gain at the resonant frequency of the filter 3.

If the output of the band-pass filter circuit 15 is positively fed back to the comparator 11 (upon power running), the tendency of the voltage across the capacitor 32 to increase having an oscillation will be suppressed by the increase of the duty ratio $\gamma$, so that the inverter voltage when viewed from the power supply side is decreased. Thus, the voltage across the capacitor 32 is decreased by the increase of discharge current to the inverter 4 and thus the oscillating decreases and fades away. As a result, the oscillating phenomenon as shown in Fig. 3 does not occur.

Upon regenerative braking, since the line current is reversed in its direction, the output of the band-pass filter circuit 15 is negatively fed back to the comparator 11.

Fig. 4 shows the speed vs. current characteristics of the motor to which reference it made in explaining the oscillation suppressing operation. It is assumed that the car is running at the frequency $f_1$, or at point a on the current characteristic curve $l_1$ at a certain duty ratio $\gamma_1$. At this time, if the oscillation of the voltage across the capacitor 32 tends to increase, the duty ratio $\gamma$ is increased with the result that the operating point moves to the current characteristic curve $l_2$, or from point a to b. Thus, the motor current increases to suppress the rise of the voltage across the capacitor 32.

The PWM inverter compares a command for the operation frequency, for example, a sine wave and a carrier, for example, a triangle wave to perform pulse width modulation. The frequency ratio of the triangle wave to sine wave is changed in response to the operating frequency of the inverter.

Fig. 5 shows the frequency ratio as the number of pulses n/Hz. The output voltage E from the inverter (proportional to the duty ratio $\gamma$) is changed stepwise with the operation frequency of the inverter.

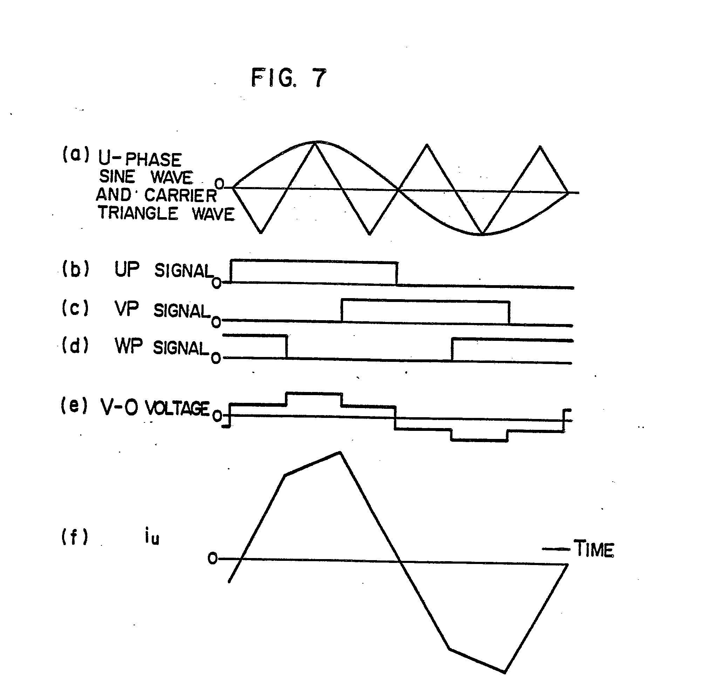

This will be described with reference to Figs. 6 and 7 which are useful for explaining the PWM operation. The PWM operation itself is known and thus will not be described in detail. Fig. 6 shows the maximum voltage condition in the PWM operation with a triangle wave of triple the frequency of the sine wave. That is, the GTO or thyristor has a commutation period of $t_{min}$; if an extinction signal is produced at $t_1$ and then a refiring signal is produced before $t_2$ i.e. before $t_{min}$ has expired, commutation fails. Thus, the maximum output voltage in the three-pulses state is much lower than the inverter rating voltage. In order to increase the inverter voltage to larger than that value, it is absolutely necessary to decrease the triangle wave stepwise to a single-pulse condition, or rating voltage condition as shown in Fig. 7. The result is that as shown in Fig. 5, the inverter output voltage E is increased stepwise.

The filter circuit 3 resonates to the stepwise increase of voltage to induce an electrical oscillation as set forth above. However, the output voltage from the inverter can no longer be adjusted continuously and this can not be suppressed by the apparatus of Fig. 1.

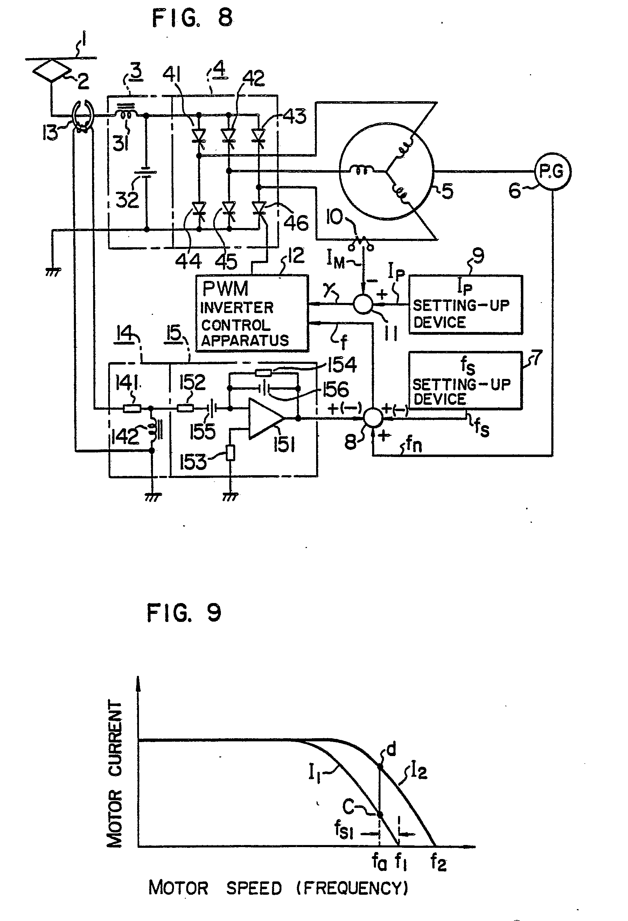

Fig. 8 shows another embodiment of this invention which is capable of suppressing such electric oscillation.

The output of the band-pass filter circuit 15 is fed back to the adding-or-subtracting device 8 within the frequency control system. That is, in Fig. 9, it is assumed that the car is running at point c on the current characteristic curve $I_1$ with the inverter operation frequency $f_1$ and set-up slip frequency $f_{s1}$. Symbol $f_a$ represents the frequency corresponding to the speed of the car. Here, the tendency of the voltage across the capacitor 32 to increase having an oscillation is detected from the increase of the line current, and the operation frequency is increased to $f_2$. Thus, since the speed of the car is not changed, the operating point shifts to point d of the current characteristic curve $I_2$ and thus the motor current is increased, so that the discharge current from the capacitor 32 is increased without adjusting the output voltage from the inverter 4, thus suppressing the oscillating increase of the voltage.

It will be readily understood that the tendency of the voltage across the capacitor 32 to decrease having an oscillation can be suppressed. In addition, upon regenerative braking, the output of the band-pass filter circuit 15 is of course negatively fed back to the device 8.

Thus, the electrical oscillation is suppressed beforehand and as a result, current induced interference, commutation failure of the inverter and uncomfortableness in riding in car can be prevented in which are caused by the electrical oscillation.

While in the above embodiments the case of the DC electric car is illustrated, this invention can similarly be applied to the AC electric car in which case a converter is only required as a DC power supply for the inverter 4. In addition, the electrical quantity for use in the detection of oscillating variation may be a DC input current to the inverter, a voltage across capacitor, or a motor current. However, these quantities include a ripple, and thus the effect of this ripple must be prevented. The band-pass filter circuit is not always necessary for detecting the oscillating change from the line current. Moreover, although it is desirable that the comparison, adding and subtracting operations are performed in digital way by a computer, they can be performed in analog way. In this sense, the speed frequency and slip frequency of course include an analog signal.

## Claims

1. A control apparatus for an electric car driven by an induction motor comprising: an inverter (4) supplied with electric power from a DC power supply (1) through a filter circuit (3);

at least one induction motor (5) for traction energized by said inverter (4);
means (6) for generating a speed frequency signal corresponding to a car speed;
means (7) for setting up a slip frequency signal corresponding to the slip of said induction motor (5);
frequency control means (8) for adding or subtracting said slip frequency signal to or from said speed frequency signal to control the output frequency of said inverter (4);
voltage control means for controlling the output voltage of said inverter (4); characterized by
means for detecting an oscillating variation of electric quantity in a circuit between said DC power supply (1) and said induction motor (5); and
means for adjusting the output voltage from said inverter (4) in accordance with the output of said oscillating variation detecting means, in order to suppress the oscillation.

2. A control apparatus for an electric car driven by an induction motor comprising:

an inverter (4) supplied with electric power from a DC power supply (1) through a filter circuit (3);
at least one induction motor (5) for traction energized by said inverter (4);
means (6) for generating a speed frequency signal corresponding to a car speed;
means (7) for setting up a slip frequency signal corresponding to the slip of said induction motor (5);
frequency control means (8) for adding or subtracting said slip frequency signal to or from said speed frequency signal to control the output frequency of said inverter (4);
voltage control means for controlling the output voltage from said inverter (4); characterised by
means for detecting an oscillating variation of electric quantity in a circuit between said DC power supply (1) and said induction motor (5); and
means for adjusting the output frequency of said inverter (4) in accordance with the output of said oscillating variation detecting means, in order to suppress the oscillation.

3. A control apparatus according to Claims 1 or 2, wherein said voltage control means comprises motor current command means (9), motor current detecting means (10), means (11) for comparing said current command and said motor current detected signal and means (12) for adjusting the duty ratio of said inverter (4) in accordance with the output of said comparing means (11), and said output voltage adjusting means utilizes said duty ratio controlling means (12).

4. A control apparatus according to Claim 1 or 2, wherein said inverter (4) comprises arms (41—46) each having a forced commutation ability, and said voltage control means comprises means for controlling said inverter (4) by pulse width modulation.

5. A control apparatus according to Claims 1

5

or 2, wherein said oscillating variation detecting means is formed of means for detecting an AC component included in a DC current between said DC power supply (1) and said filter circuit (3).

6. A control apparatus according to Claims 1 or 2, wherein said oscillating variation detecting means is formed of a current transformer (13) with an air gap, a series circuit of a resistor (141) and a choke coil (142) for permitting the output current therefrom to flow therethrough, and circuit means (15) for taking out a voltage from said choke coil (142).

7. A control apparatus according to Claims 1 or 2, wherein said oscillating variation detecting means comprises a band-pass filter circuit for tuning to the resonant frequency of said filter circuit (3).

**Patentansprüche**

1. Regelgerät für ein von einem Asynchronmotor angetriebenes Fahrzeug mit:

einem Wechselrichter (4), der aus einem Gleichstromnetz (1) über einen, Filterschaltkreis (3) mit elektrischer Energie versorgt wird;
wenigstens einem vom Wechselrichter (4) gespeisten Fahr-Asynchronmotor (5);
einer Einrichtung (6) zur Erzeugung eines Geschwindigkeitsfrequenzsignals entsprechend der Fahrzeuggeschwindigkeit;
einer Einrichtung (7) zur Erzeugung eines Schlupffrequenzsignals entsprechend dem Schlupf des Asnynchronmotors (5);
einer Frequenzsteuereinrichtung (8) zum Addieren oder Subtrahieren des Schlupffrequenzsignals zu oder von dem Geschwindigkeitsfrequenzsignal zur Steuerung der Ausgangsfrequenz des Wechselrichters (4);
einer Spannungssteuereinrichtung zur Steuerung der Ausgangsspannung des Wechselrichters (4); gekennzeichnet durch
eine Einrichtung zum Erfassen einer schwingenden Änderung einer elektrischen Größe in einem Stromkreis zwischen dem Gleichstromnetz (1) und dem Asynchronmotor (5); und
eine Einrichtung zum Einstellen der Ausgangsspannung des Wechselrichters (4) in Übereinstimmung mit dem Ausgangssignal der Schwingungsänderungserfassungseinrichtung, um die Schwingung zu unterdrucken.

2. Regelgerät für ein von einem Asynchronmotor angetriebenes Fahrzeug mit:

einem Wechselrichter (4), der aus einem Gleichstromnetz (1) über einen Filterschaltkreis (3) mit elektrischer Energie versorgt wird;
wenigstens einem vom Wechselrichter (4) gespeisten Fahr-Asynchronmotor (5);
einer Einrichtung (6) zur Erzeugung eines Geschwindigkeitsfrequenzsignals entsprechend der Fahrzeuggeschwindigkeit;
einer Einrichtung (7) zur Erzeugung eines Schlupffrequenzsignals entsprechend dem Schlupf des Asynchronmotors (5);
einer Frequenzsteuereinrichtung (8) zum Addieren oder Subtrahieren des Schlupffrequenzsignals zu oder von dem Geschwindigkeitsfrequenzsignal zur Steuerung der Ausgangsfrequenz des Wechselrichters (4);
einer Spannungssteuereinrichtung zur Steuerung der Ausgangsspannung des Wechselrichters (4); gekennzeichnet durch
eine Einrichtung zum Erfassen einer schwingenden Änderung einer elektrischen Größe in einem Stromkreis zwischen dem Gleichstromnetz (1) und dem Asynchronmotor (5); und
eine Einrichtung zum Einstellen der Ausgangsfrequenz des Wechselrichters (4) in Übereinstimmung mit dem Ausgangssignal der Schwingungsänderungserfassungseinricht - ung, um die Schwingung zu unterdrücken.

3. Regelgerät nach Anspruch 1 oder 2, wobei die Spannungssteuereinrichtung eine Motorstromsollwerteinrichtung (9), eine Motorstromerfassungseinrichtung (10), eine Einrichtung (11) zum Vergleichen des Stromsollwertes und des erfaßten Motorstromsignals und eine Einrichtung (12) zum Einstellen des Tastverhältnisses des Wechselrichters (4) in Übereinstimmung mit dem Ausgangssignal der Vergleichseinrichtung (11) aufweist, wobei die Ausgangsspannungseinstelleinrichtung von der Tastverhältnissteuereinrichtung (12) Gebrauch macht.

4. Regelgerät nach Anspruch 1 oder 2, wobei der Wechselrichter (4) Brückenzweige (41)—(46) aufweist, die zwangskommutationsfähig sind, und wobei die Spannungssteuereinrichtung eine Einrichtung zur Steuerung des Wechselrichters (4) durch Pulsbreitenmodulation aufweist.

5. Regelgerät nach Anspruch 1 oder 2, wobei die Schwingungsänderungserfassungseinrichtung aus einer Einrichtung gebildet wird, die eine in einem Gleichstrom zwischen dem Gleichstromnetz (1) und dem Filterschaltkreis (3) enthaltene Wechselstromkomponente erfaßt.

6. Regelgerät nach Anspruch 1 oder 2, wobei die Schwingungsänderungserfassungseinrichtung aus einem Stromwandler (13) mit einem Luftspalt, einer Serienschaltung eines Widerstandes (141) und einer Drosselspule (142), durch die dessen Ausgangsstrom fließen kann, und eine Schaltungseinrichtung (15) zur Abnahme einer Spannung von der Drosselspule (142) gebildet ist.

7. Regelgerät nach Anspruch 1 oder 2, wobei die Spannungsänderungserfassungseinrichtung einen Bandpaßfilterschaltkreis zum Abstimmen auf die Resonanzfrequenz des Filterschaltkreises (3) aufweist.

## Revendications

1. Appareil de commande pour un véhicule électrique entraîné par un moteur à induction, comprenant:

un onduleur (4) alimenté par une énergie électrique à partir d'une source (1) d'alimentation en énergie électrique à courant continu par l'intermédiaire d'un circuit de filtre (3),
au moins un moteur à induction (5) utilisé pour la traction et alimenté par ledit onduleur (4),
des moyens (6) servant à produire un signal de fréquence de vitesse correspondant à la vitesse du véhicule,
des moyens (7) pour régler un signal de fréquence de glissement correspondant au glissement dudit moteur à induction (5),
des moyens (8) de commande de la fréquence servant à ajouter ou soustraire ledit signal de fréquence de glissement au ou dudit signal de fréquence de vitesse pour commander la fréquence de sortie dudit onduleur (4),
des moyens de commande de la tension servant à commander la tension de sortie dudit onduleur (4), caractérisé par
des moyens permettant de détecter une variation oscillatoire d'une grandeur électrique dans un circuit entre ladite source d'alimentation en énergie à courant continu (1) et ledit moteur à induction (5), et
des moyens permettant de régler la tension de sortie délivrée par ledit onduleur (4) en fonction du signal de sortie desdits moyens de détection de la variation oscillatiore, afin de supprimer cette dernière.

2. Appareil de commande pour un véhicule électrique entraîné par un moteur à induction, comprenant

un onduleur (4) alimenté par une alimentation en énergie électrique à partir d'une source d'alimentation en énergie électrique à courant continu (1) par l'intermédiaire d'un circuit de filtre (3),
au moins un moteur à induction (5) servant à la traction et alimenté par ledit onduleur (4),
des moyens (6) servant à produire un signal de fréquence de vitesse correspondant à une vitesse du véhicule,
des moyens (7) servant à établir un signal de fréquence de glissement correspondant au glissement dudit moteur à induction (5),
des moyens (8) de commande de la fréquence servant à ajouter ou à soustraire ledit signal de fréquence de glissement à ou dudit signal de fréquence de vitesse de manière à commander la fréquence de sortie dudit onduleur (4),

des moyens de commande de la tension servant à commander la tension de sortie délivrée par ledit onduleur (4), caractérisé par
des moyens servant à détecter une variation oscillatoire d'une grandeur électrique dans un circuit entre ladite source d'alimentation en énergie à courant continu (1) et ledit moteur à induction (5), et
des moyens pour régler la fréquence de sortie dudit onduleur (4) en fonction du signal de sortie desdits moyens de détection de la variation oscillatoire, afin de supprimer cette dernière.

3. Appareil de commande selon la revendication 1 ou 2, dans laquelle lesdits moyens de commande de la tension comprennent des moyens (9) de commande du courant du moteur, des moyens (10) de détection du courant du moteur, des moyens (11) servant à comparer ledit signal de commande du courant et ledit signal détecté du courant du moteur, et des moyens (12) permettant de régler le taux d'utilisation dudit onduleur (4) en fonction du signal de sortie desdits moyens de comparaison (11), et lesdits moyens de réglage de la tension de sortie utilisent lesdits moyens (12) de commande du taux d'utilisation.

4. Appareil de commande selon la revendication 1 ou 2, dans lequel ledit onduleur (4) comporte des bras (41—46) pouvant faire chacun l'objet d'une commutation forcée, et lesdits moyens de commande à la tension comprennent les moyens permettant de commander ledit onduleur (4) au moyen d'une modulation d'impulsions en durée.

5. Appareil de commande selon la revendication 1 ou 2, dans lequel lesdits moyens de détection de la variation oscillatoire sont constitués par des moyens permettant de détecter une composante à courant alternatif incluse dans un courant continu, entre ladite source d'alimentation en énergie à courant continu (1) et ledit circuit de filtre (3).

6. Appareil de commande selon la revendication 1 ou 2, dans lequel lesdits moyens de détection de la variation oscillatoire sont constituées par un transformateur d'intensité (13) comportant un entrefer, par un circuit série formé d'une résistance (141) et d'une bobine d'arrêt (142) et qui est traversé par le courant de sortie provenant du transformateur d'intensité, et par des moyens formant circuit (15) servant à prélever une tension à partir de ladite bobine d'arrêt (142).

7. Appareil de commande selon la revendication 1 ou 2, dans lequel lesdits moyens de détection de la variation oscillatoire comprennent un circuit de filtre passebande destiné à réaliser l'accord sur la fréquence de résonance dudit circuit de filtre (3).

## FIG. 1

## FIG. 2

1

FIG. 3a

VOLTAGE ACROSS CAPACITOR 32

TIME

FIG. 3b

CURRENT IN REACTOR 31 (LINE CURRENT)

TIME

FIG. 3c

OUTPUT OF CURRENT TRANSFORMER 13

TIME

FIG. 3d

OUTPUT OF PHASE DELAY CIRCUIT 14

TIME

FIG. 4

MOTOR CURRENT

$I_2$

$I_1$

b

a

$f_1$  $f_0$

MOTOR SPEED (FREQUENCY)

2

## FIG. 5

## FIG. 6

(a) U-PHASE SINE WAVE AND CARRIER TRIANGLE WAVE

(b) UP SIGNAL

(c) VP SIGNAL

(d) WP SIGNAL

(e) V-O VOLTAGE

(f) $i_u$

(UN, VN, WN, SIGNALS ARE THE REVERSE OF UP, VP, WP, SIGNALS )

0059924

FIG. 7

(a) U-PHASE
    SINE WAVE
    AND CARRIER
    TRIANGLE WAVE

(b)  UP SIGNAL

(c)  VP SIGNAL

(d)  WP SIGNAL

(e) V-O VOLTAGE

(f)    iu

— TIME

4

POOR
QUALITY

0 059 924

FIG. 8

FIG. 9

MOTOR SPEED (FREQUENCY)

5